(19) Europäisches Patentamt

European Patent Office

Office européen des brevets

(11) Numéro de publication: **0 220 976**
**A1**

# (12) DEMANDE DE BREVET EUROPEEN

(21) Numéro de dépôt: **86402068.0**

(22) Date de dépôt: **19.09.86**

(51) Int. Cl.⁴: **B 60 J 7/04**

(30) Priorité: 26.09.85 FR 8514270

(43) Date de publication de la demande:
06.05.87 **Bulletin 87/19**

(84) Etats contractants désignés:
**AT BE CH DE GB IT LI LU NL SE**

(71) Demandeur: **Etablissements FARNIER ET PENIN**
**11-13, rue J.B. Charcot**
**F-92400 Courbevole (Hauts-de-Seine) (FR)**

(72) Inventeur: **Lavilie, Bernard**
**29 rue de Champroutet**
**Saint Perchaire F-79300 Bressuire (FR)**

**Prouteau, Philippe**
**8 rue des Rigaudières**
**F-79600 Airvault (FR)**

(74) Mandataire: **Fruchard, Guy et al**
**CABINET BOETTCHER 23, rue la Boétie**
**F-75008 Paris (FR)**

(54) Dispositif de toit ouvrant pour pavillon de véhicule automobile.

㉗ L'invention concerne un dispositif de toit ouvrant pour pavillon de véhicule. Selon l'invention, l'armature de soutien du panneau (3) mobile, articulée sur un cadre fixe (1) bordant l'ouverture du pavillon, est constituée par une coulisse fixe (6) et un coulisseau (7) télescopique sur la coulisse (6) dans lesquels les pattes (9 et 10) d'une pièce (8) de fixation peuvent coulisser. Le coulissement de ces pattes dans la glissière (6) et dans le coulisseau (7) permet d'augmenter de manière très appréciable le déport du panneau au-dessus du pavillon pour découvrir l'ouverture.

Application à l'industrie automobile et à celle de ses accessoires.

Fig. 2

EP 0 220 976 A1

**Description**

Dispositif de toit ouvrant pour pavillon de véhicule automobile

La présente invention concerne un dispositif de toit ouvrant, pour pavillon de véhicule automobile, qui peut être disposé soit en première monte, soit en deuxième monte.

On connaît des dispositifs de toit ouvrant pour véhicules automobiles, constitués par un cadre et un contre-cadre qui viennent serrer l'épaisseur de la tôle du pavillon pourvue d'une ouverture, ce cadre et ce contre-cadre constituant un châssis pour un panneau, soit en verre, soit en tôle, articulé autour d'une charnière prévue l'avant du châssis, au moyen d'un système permettant le relevage de la partie arrière du panneau pour constituer aérateur de l'habitacle du véhicule, et éventuellement, une petite translation de ce panneau pour découvrir une partie de l'espace intérieur du châssis.

Les mécanismes connus permettant la translation du panneau pour découvrir une partie de l'ouverture du pavillon, sont généralement complexes et coûteux. Ils sont, pour la plupart, constitués d'un embiellage qui assure d'une part la fonction de relevage de la partie arrière du panneau et d'autre part la fonction de translation, selon un principe de parallélogramme articulé.

La présente invention entend proposer un dispositif de toit ouvrant permettant une translation du panneau articulé, à l'extérieur du véhicule, d'une amplitude considérablement augmentée par rapport à celle actuellement possible.

C'est ainsi qu'avec l'invention, on peut découvrir plus de la moitié de l'ouverture ménagée dans le pavillon du véhicule.

L'invention a donc pour objet un dispositif de "toit ouvrant" pour pavillon de véhicule automobile, constitué par un châssis en forme de cadre susceptible d'être monté dans l'ouverture du pavillon, et retenu sur les bords de celle-ci par un panneau solidaire d'une armature articulée sur le cadre, autour d'un axe d'articulation parallèle à et au voisinage du bord avant du cadre, et par un organe de manoeuvre et de verrouillage solidaire de l'armature et coopérant avec le bord du cadre opposé au bord avant susdit pour faire pivoter l'armature depuis une première position dans laquelle elle s'étend dans le plan du cadre, le panneau constituant obturateur de l'ouverture en reposant sur un joint d'étanchéité prévu sur le bord interne du cadre, jusqu'à une seconde position dans laquelle l'armature est inclinée sur le plan du cadre autour dudit axe d'articulation.

Selon l'une des caractéristiques principales de l'invention, l'armature susdite est constituée par une paire de montants parallèles télescopiques, sensiblement perpendiculaires à l'axe d'articulation, chaque montant possédant une glissière articulée par l'une de ses extrémités autour de l'axe susdit, et un coulisseau monté à coulissement sur la glissière susdite, le panneau étant relié à chacun desdits montants par une pièce de fixation possédant une première patte montée à coulissement dans la glissière susdite et une seconde patte montée à coulissement dans ledit coulisseau.

Dans un mode de réalisation de l'invention, le coulissement des pattes susdites dans ladite glissière et dans ledit coulisseau est assuré dans une lumière oblongue de ceux-ci, les extrémités de la lumière de la glissière constituant des butées au déplacement du panneau par rapport à l'armature.

L'organe de manoeuvre et de verrouillage susdit de l'armature par rapport au cadre est attelé à l'extrémité de chacune des glissières des montants susdits opposée à son extrémité articulée.

Les glissière et coulisseau de chaque montant sont constitués par deux profilés en U emboîtés l'un dans l'autre pour définir un caisson dans les parois latérales duquel sont ménagées les lumières de coulissement desdites première et seconde pattes.

Le panneau présentera au voisinage de la partie médiane de son bord avant, une poignée de manoeuvre en coulissement le long des montants susdits.

L'invention sera mieux comprise au cours de la descripton donnée ci-après à titre d'exemple purement indicatif et non limitatif qui permettra d'en dégager les avantages et les caractéristiques secondaires.

Il sera fait référence aux dessins annexés dans lesquels :

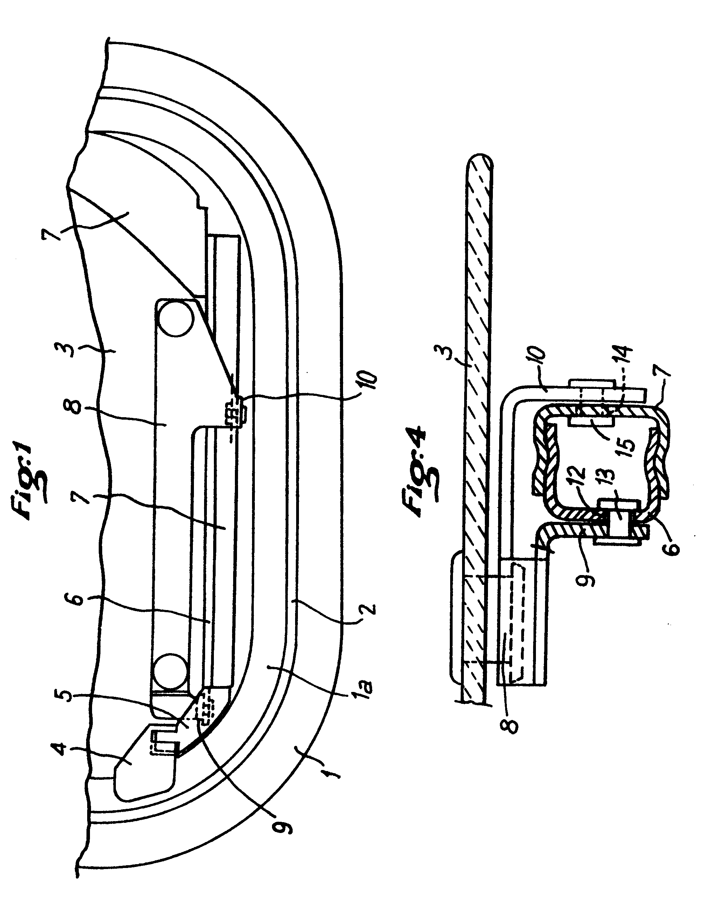

    - la figure 1 est une vue partielle et schématique de dessus du dispositif selon l'invention,

    - la figure 2 montre par une vue en coupe le dispositif selon l'invention dans sa position de déflecteur,

    - la figure 3 montre, par une vue en coupe, le dispositif selon l'invention dans une position dans laquelle le panneau est situé à la partie extrême des montants susdits,

    - la figure 4 est une vue schématique en coupe de la liaison du panneau et de l'armature qui le porte.

En se reportant à ces figures on voit que le dispositif selon l'invention est constitué par un cadre 1, pourvu sur son pourtour intérieur d'un joint 2 sur lequel peut reposer un panneau 3, ce panneau pouvant être en verre ou en tôle. Sur une partie intérieure 1a du cadre 1 sont disposées deux pièces fixes 4, dont une seulement est représentée aux figures, d'articulation d'une armature de support du panneau 3. Cette articulation coopère, de manière connue, avec une pièce 5, qui constitue l'élément mobile de la charnière, et à laquelle est attelé le montant télescopique selon l'invention. Plus précisément, chacune des deux pièces 5 mises en oeuvre dans le dispositif est solidaire d'une extrémité d'une glissière 6, dont on voit la section sur la figure 4 en forme de U. Cette glissière 6 porte à coulissement un coulisseau 7, également de section en forme de U, les ailes du U de chacune des pièces 6 et 7 étant profilées de manière complémentaire pour qu'elles ne puissent pas se dégager l'une de l'autre dans un sens transversal.

Le panneau 3 est relié aux montants télescopiques 6, 7 au moyen d'une pièce de fixation 8 qui possède une premiagere patte avant 9 et une seconde patte arrière 10, coopérant respectivement avec la glissière 6 et le coulisseau 7. La glissière 6 de chaque montant est reliée à l'autre au moyen d'un arceau transversal 11, fixé à chacune de leurs extrémités opposées à leurs extrémités solidaires de la pièce d'articulation 5.

La glissière 6 est pourvue, dans sa paroi latérale formant liaison entre les deux ailes du U qu'elle forme, d'une lumière oblongue 12 dans laquelle coulisse un axe 13 solidaire de la patte 9. De même, le coulisseau 7 est pourvu dans sa partie latérale correspondante d'une rainure 14 dans laquelle un axe 15, solidaire de la patte 10, peut coulisser.

Par la référence 16 on a représenté une poignée de verrouillage du dispositif dans sa position d'obturation de l'ouverture définie par le cadre 1. Cette poignée ne sera pas décrite en détail, car elle est connue en elle-même. On notera simplement qu'elle est solidaire de l'arceau 11 qui relie les extrémités des glissières 6.

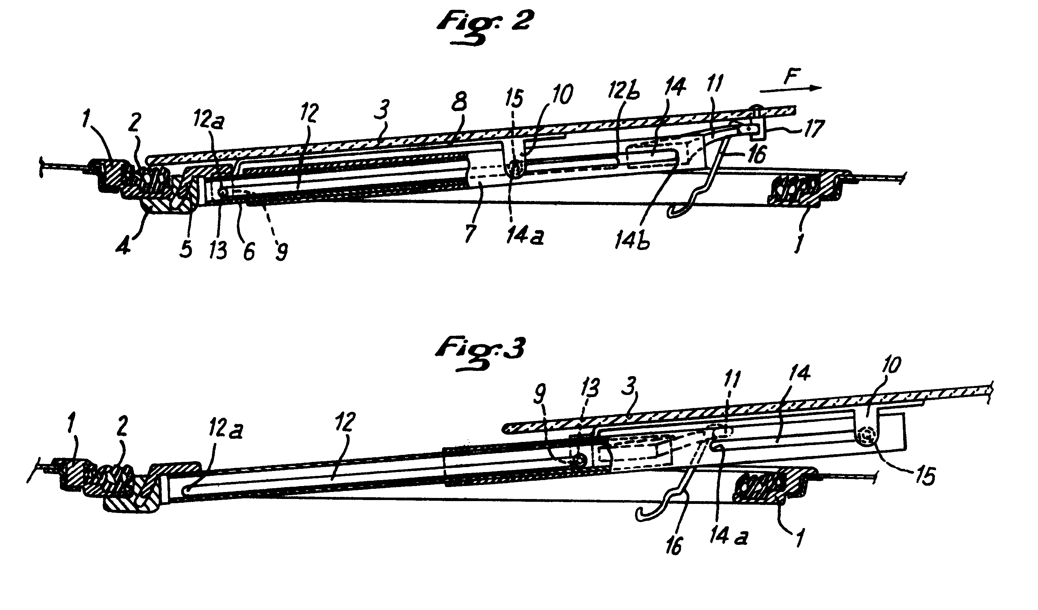

Le panneau 3 possède, au-delà de l'arceau 11, une sorte d'étrier 17 qui peut venir en prise avec la partie centrale dudit arceau, comme le montre la figure 2. L'ouverture de cet étrier 17 sera tournée vers l'extrémité d'articulation de l'armature sur le châssis, de manière que, par translation dans le sens F marqué sur la figure 2, l'étrier puisse dégager de l'arceau 11.

En déverrouillant la poignée 16 on place le dispositif de toit ouvrant dans sa position représentée à la figure 2. Le maintien dans cette position, c'est-à-dire d'aérateur de l'habitacle, est assuré par un organe ou dispositif connu en lui-même et non représenté. Par une action dans le sens de la flèche F sur le panneau 3, au moyen par exemple d'une poignée située au voisinage de la partie avant médiane dudit panneau et faisant saillie dans l'habitacle, cette poignée n'étant pas représentée aux dessins, l'axe 13 de la patte 9 quitte l'extrémité 12a de l'ouverture oblongue 12, en direction de l'extrémité 12b de cette ouverture, tandis que dans le même temps l'axe 15 solidaire de la patte 10 quitte l'extrémité 14a de l'ouverture 14 en direction de l'extrémité 14b. Au moment où l'axe 15 parvient à cette extrémité 14b, la translation se poursuit en entraînant le coulisseau 7 le long de la glissière 6, jusqu'à ce que l'axe 13 parvienne en butée contre l'extrémité 12b de l'ouverture 12. Cette configuration est illustrée par la figure 3. On voit, dans cette position, que le panneau 3 est largement déporté vers l'arrière du pavillon du véhicule, laissant ainsi largement découverte, sur plus de la moitié de sa dimension, l'ouverture intérieure du châssis 1. Le support du panneau 3 est assuré de manière très satisfaisante par le coulisseau 7, qui reste largement engagé sur la glissière 6.

On voit sur ces figures que l'amplitude de translation du panneau 3 est définie par la longueur de l'ouverture oblongue 12 ménagée dans la glissière 6, qui peut être pratiquement aussi importante que la dimension dans le même sens de l'ouverture circonscrite par le châssis 1.

Pour la fermeture du dispositif, on ramène le panneau 3 vers l'avant du véhicule ce qui entraîne dans un premier temps le coulissement des pattes 9, 10 dans les ouvertures 12 et 14, puis dans un deuxième temps la poursuite du coulissement de l'axe 13 de la patte 9 dans l'ouverture 12 et l'entraînement par l'axe 15 de la patte 10 du coulisseau 7 en direction de l'extrémité articulée de la glissière 6. Le mouvement dans ce sens de retour est arrêté par l'engagement de l'étrier 17 sur l'arceau 11.

L'invention présente l'avantage d'être de construction simple et robuste, tout en offrant au dispositif de toit ouvrant la possiblité de dégager très largement et en tout cas de plus de la moitié de sa surface, l'ouverture délimitée à l'intérieur du châssis 1.

L'invention trouve une application intéressante dans le domaine de l'automobile et de ses accessoires.

**Revendications**

1. Dispositif de toit ouvrant pour pavillon de véhicule automobile constitué par un châssis (1) en forme de cadre susceptible d'être monté dans l'ouverture du pavillon et retenu sur les bords de celle-ci par un panneau (3) solidaire d'une armature (5, 6, 7, 11) articulée sur le cadre (1) autour d'un axe d'articulation parallèle à et au voisinage du bord avant du cadre, et par un organe (16) de manoeuvre et de verrouillage solidaire de l'armature et coopérant avec le bord du cadre opposé au bord avant susdit, pour faire pivoter l'armature depuis une première position dans laquelle elle s'étend dans le plan du cadre (1), le panneau (3) constituant obturateur de l'ouverture, en reposant sur un joint d'étanchéité (2) prévu sur le bord interne du cadre (1), jusqu'à une seconde position dans laquelle l'armature est inclinée sur le plan du cadre (1) autour dudit axe d'articulation, caractérisé en ce que l'armature susdite est constituée par une paire de montants parallèles (6, 7) télescopiques, sensiblement perpendiculaires a l'axe d'articulation, chaque montant possédant une glissière (6) articulée par l'une de ses extrémités (5) autour de l'axe susdit et un coulisseau (7) monté à coulissement sur la glissière (6) susdite, le panneau (3) étant relié à chacun desdits montants (6, 7) par une pièce de fixation (8) possédant une première patte (9) montée à coulissement dans la glissière (6) susdite et une seconde patte (10) montée à coulissement dans ledit coulisseau (7).

2. Dispositif de toit ouvrant selon la revendication 1 caractérisé en ce que le coulissement des pattes (9, 10) susdites dans ladite glissière (6) et dans ledit coulisseau (7) est assuré dans une lumière oblongue (12, 14) de ceux-ci, les extrémités (12a, 12b) de la lumière de la glissière (6) constituant des butées au déplacement du panneau (3) par rapport à l'armature.

3. Dispositif selon la revendication 1 ou la revendication 2 caractérisé en ce que l'organe (11, 16) de manoeuvre et de verrouillage de l'armature par rapport au cadre (1) est attelé à l'extrémité de chacune des glissières (6) des montants susdits opposée à son extrémité articulée.

4. Dispositif selon l'une quelconque des revendications précédentes caractérisé en ce que glissière (6) et coulisseau (7) de chaque montant sont constitués par deux profilés en U emboîtés l'un dans l'autre pour définir un caisson dans les parois latérales duquel sont ménagées les lumières (12, 14) de coulissement desdites première (9) et seconde (10) pattes.

*Fig:1*

4 5 6 7 8 3 7

9

1 1a 2 10

*Fig:4*

3

8

10

9 12

13

15 14

6 7

0220976

*Fig. 2*

*Fig. 3*

0220976

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A-2 078 295  (VERMEULEN) <br> * Page 1, ligne 126 - page 2, ligne 8; page 2, lignes 36-49; figures 1-7 * | 1,2,4 | B 60 J   7/04 |
| | --- | | |
| Y | US-A-3 589 778  (OLSON) <br> * Colonne 1, ligne 69 - colonne 2, ligne 31; figures 1,2 * | 1,2,4 | |
| | --- | | |
| A | US-A-1 826 871  (FORD) <br> * Page 2, lignes 44-75; figures 5,7 * | 1,2 | |
| | --- | | |
| A | DE-A-2 512 426  (FORD) <br> * Page 4, lignes 15-19; figures 1-4 * | 1 | |
| | --- | | **DOMAINES TECHNIQUES RECHERCHES (Int. Cl.4)** |
| A | GB-A-  326 554  (NEWNS) <br> * Page 2, lignes 27-38; figure 3 * | 1 | B 60 J |
| | --- | | |
| A | FR-A-1 553 358  (HAMMERSTEIN) <br> * Page 2, colonne de gauche, lignes 31-44; figure 2 * | 1,4 | |
| | ----- | | |

Le présent rapport de recherche a été établi pour toutes les revendications

| Lieu de la recherche | Date d'achèvement de la recherche | Examinateur |
|---|---|---|
| LA HAYE | 05-01-1987 | AYITER I. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82